# EUROPEAN PATENT SPECIFICATION

(11) **EP 0 479 713 B1**
(45) Date of publication and mention of the grant of the patent: **07.06.1995**
(21) Application number: 91810179.1
(22) Date of filing: 19.03.1991
(51) Int. Cl.: B25B 21/00, B25B 21/02

(54) **Electric wrench**
Elektrischer Schraubenschlüssel
Clef à écrous électrique

(30) Priority: 02.10.1990 JP 103319/90
(43) Date of publication of application: 08.04.1992
(73) Proprietor: Lin, Pi-Chu, Chia-Yi City (TW)
(72) Inventor: Lin, Pi-Chu, Chia-Yi City (TW)
(74) Representative: Eschmann, Heinz

(56) References cited:
- EP-A- 0 381 787
- SU-A- 1 156 905

## Description

The invention relates to an electric wrench, more particularly, to an electric wrench which uses a low power motor but instantly reaches high rotation speed, so that it can accomplish a given task, that is tightening or loosening a screw or nut, as effectively as models with larger motors.

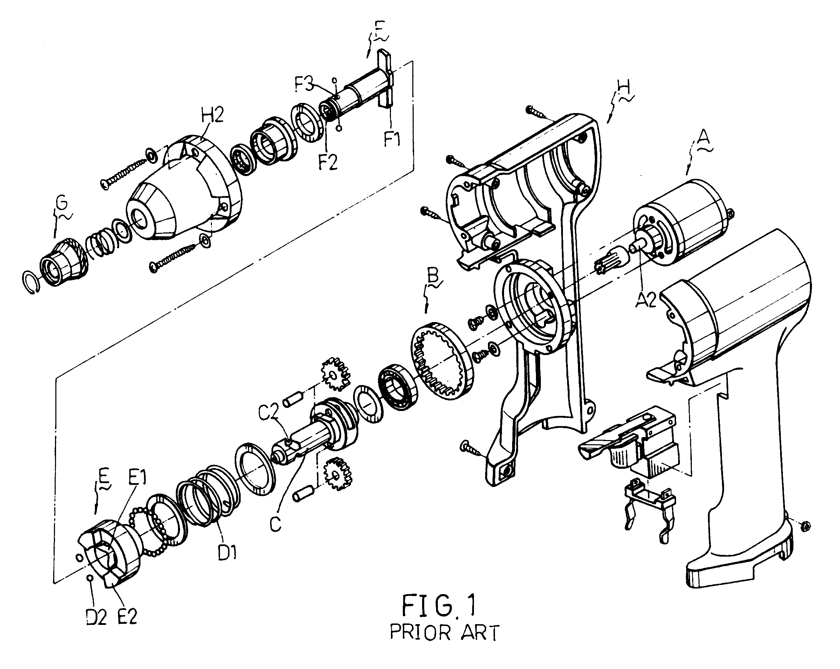

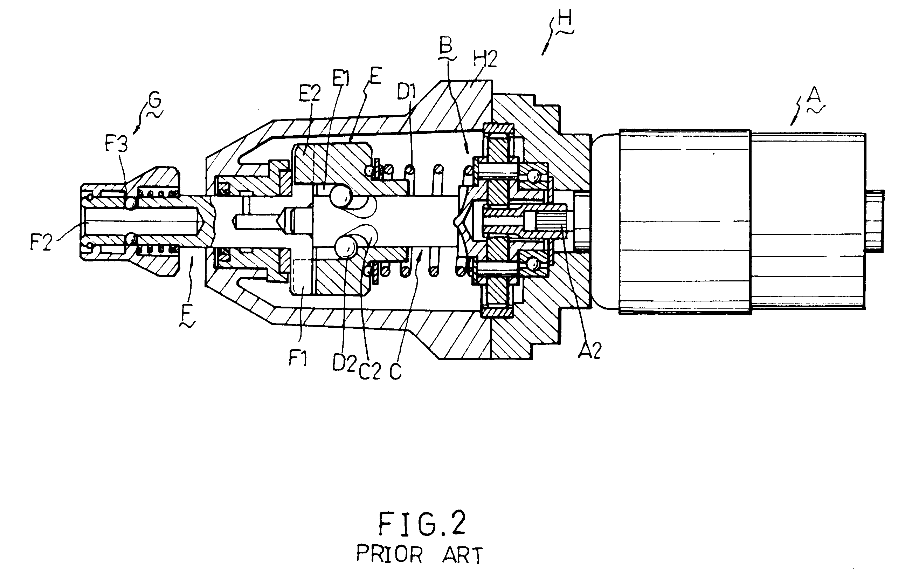

Referring to Figs. 1 and 2, a conventional electric wrench includes a housing H enclosing a motor A with an axle A2; a transmission gear assembly B associated with the axle of the motor A; the base end of a drive shaft C fixedly attached to the gear assembly B, a pair of grooves C2 on the other end of the drive shaft C, into which buffing balls D2 can be disposed; a drive sleeve E having a pair of opposed grooves E1 inside its bore and sleeved over the drive shaft, the buffing balls D2 engaging the two pairs of grooves of the drive sleeve and the drive shaft, the drive sleeve further having a pair of engaging ends extending axially therefrom; the base end of a driven shaft F having two engaging ends F1, being adapted to engage with the pair of engaging ends E2 of the drive sleeve, the top end of said driven shaft having a throughbore F2 in which a tool can be inserted, and a throughhole F3 passing through the through bore F2 adjacent to the top end of the same; a coil spring D1 disposed around the drive shaft urging the drive sleeve to the driven shaft so that the two pairs of engaging ends can engage each other; a clamping means G sleeved on the front end of the driven shaft F and clamping said tool, which exists outside of the front portion H2 of the housing H, as shown in Figure 2.

In order to achieve high torsion and high speed, the conventional wrench has to use a motor of high power. This is only because at the beginning or end of a given task, high torsion is required to overcome increased friction at that stage. However, the intermediate stage between the beginning and the end of securing operation, does not require such high power, so conventional electric wrenches waste energy.

The main object of the present invention is to provide an electric wrench which uses a low power motor to accomplish a given task as effectively as conventional electric wrenches do, thereby saving energy.

According to the present invention, an electric wrench includes: a housing enclosing a motor having an axle; a transmission gear assembly connected to the axle of the motor; a drive shaft connected to the gear assembly at the rear end and having splined grooves of a predetermined length axially formed on the front end; a drive sleeve having two engaging members, preferably pegs, and inner keys extending axially along the throughbore disposed around the drive shaft, engaging the splined grooves by means of its inner keys. The rear end of a driven shaft has two engaging members, preferably pegs, which are adapted to engage the two engaging members of the drive sleeve. The front end of said driven shaft clamps a tool. A coil spring is disposed around the drive shaft to urge the drive sleeve into a position nearer the driven shaft, in which position the two pairs of engaging members engage each other.

An electromagnetically controlled clutch includes electromagnet members provided around the rear end of the drive shaft and temporary-magnetizable members provided around the rear end of the drive sleeve adjacent to said electromagnet members. The temporary-magnetizable members are not rotatable with the drive sleeve but are movable axially with the drive sleeve, preferably a bearing is disposed between the drive sleeve and the temporary-magnetizable members, a non-magnetizable plate being disposed between the bearing and the temporary-magnetizable members so the drive sleeve is not magnetized. The temporary-magnetizable members are attracted by the electromagnet members and move towards them, against the biasing force of the coil spring, when the electromagnet members are energized thereby causing the engaging members of the drive sleeve to disengage from the engaging members of the driven shaft.

A centrifugally controlled switch de-energizes the electromagnet members when the drive shaft reaches a predetermined rate of rotation and re-energizes the electromagnet members when the drive shaft slows to a speed lower than that predetermined rate. A centrifugal swinging means actuates the centrifugal controlled switch.

Other features and advantages of the present invention will become apparent in the following detailed description, including drawings, all of which show a non-limiting form of the invention, and of which:
Fig. 1 shows an exploded view of an electric wrench of the prior art.
Fig. 2 shows a cross sectional view of an electric wrench of Fig. 1.
Fig. 3 shows a cross sectional view of an electric wrench according to the present invention.
Figs. 4 and 4(A) are detailed views of a preferred embodiment of an electric wrench according to the present invention.
Fig. 5 is a detailed view of the preferred embodiment of an electric wrench of Fig. 4. in operation and
Fig. 6 is a cross sectional view of the wrench in another operating position.

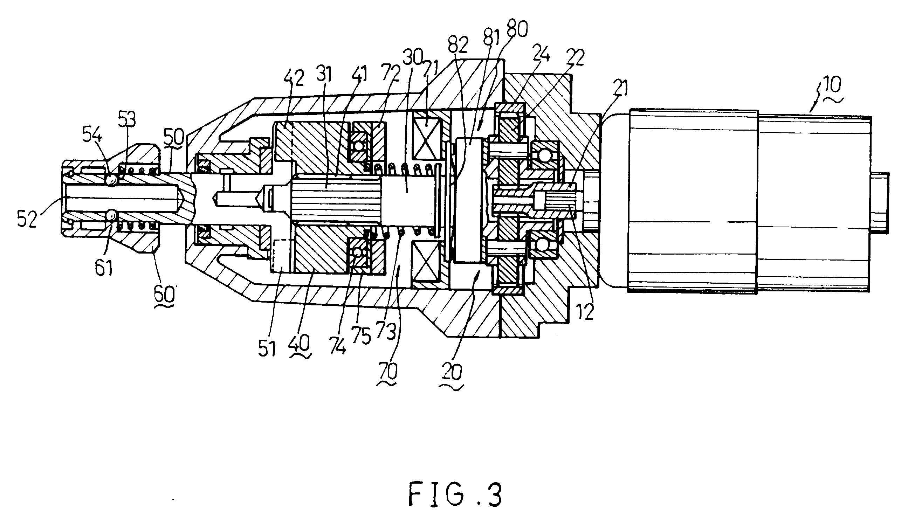

Figure 3 shows a cross sectional view of an electric wrench according to the present invention. Accordingly, it includes a motor 10, a transmission gear assembly 20, a drive shaft 30, a drive sleeve 40, a driven shaft 50, a clamping means 60, an electromagnetically controlled clutch 70, a centrifugally controlled means 80 includes a centrifugal controlled switch 82 and a centrifugal swinging means 81 for controlling the electromagnet members 80.

The housing encloses a motor 10 which includes an axle 12. This motor has horse power lower than those in prior art electric wrenches. A transmission gear assembly 20 includes a gear shaft 21 fixedly connected to the axle 12 of the motor 10, and an enforcing outer plate 24 having inwardly spaced teeth disposed around the gear shaft. The rear end of the drive shaft 30 is securely connected to the gear shaft, and a plurality of splined grooves 31 are formed axially on the outer surface of the front end of the drive shaft. At least two gear wheels 22 are respectively disposed between the outer plate 24 and the drive shaft, said gear wheels mesh with the drive shaft.

A drive sleeve 40 having inner keys formed axially therein, and a first pair of engaging pegs 42 at its front end, is disposed around the front end of the drive shaft 30, the inner keys engaging said splined grooves, so that the drive sleeve is rotatable with the drive shaft.

The rear end of a driven shaft 50 has engaging pegs 51 to compliment and engage those 42 of the drive sleeve 40. The front end of the driven shaft has a pair of grooves 53 for receiving buffing balls 54 and a throughbore 52 for clamping a tool.

A coil spring 73 is disposed around the drive shaft to urge the drive sleeve 40 toward the driven shaft 50 so that the two sets of engaging pegs (42, 51) engage each other.

The clamping means 60 includes a sliding head with inner wall having an annular protrusion 61 therein, so that when the sliding head is sleeved on the front end of the driven shaft 50, the annular protrusion lodges the balls 54 in the groove 53, thereby the throughbore 52 firmly clamps a tool bit.

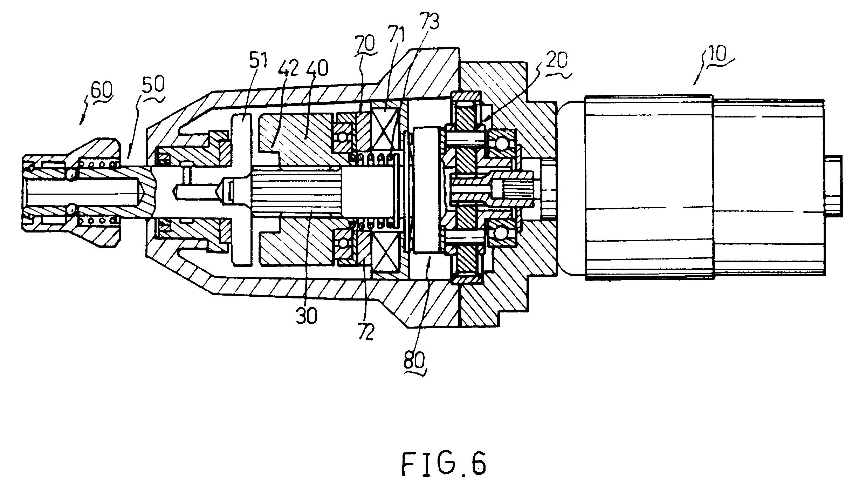

The electromagnetically controlled clutch 70 includes a plurality of electromagnet members 71 provided around the rear end of the drive shaft 30, a plurality of temporary magnetizable members 72, made mostly of soft magnetic material, provided around drive shaft 30 at the rear end of the drive sleeve, adjacent to said electromagnet members (71). The temporary magnetizable members (72) are not rotatable with the drive sleeve (40), but are movable axially with the drive sleeve (40), because a bearing 74 is disposed between the rear end of the drive sleeve 40 and the temporary magnetizable members 72. A non-magnetic member 75, like an aluminum disc, is disposed between the bearing 74 and the temporary magnetizable members 72 so that the drive sleeve will not be magnetized by the electromagnet members 71. The set of temporary magnetizable members 72 is attracted by and moves toward the electromagnet members 71, against the force of coil spring 73, when the drive shaft 30 is rotated at a slower rate than a predetermined speed, at which time the electromagnet members 71 are energized by actuation of a centrifugally controlled switch 82 mounted on the drive shaft 30. The switch 82 is acutuated by a swinging means 81, also mounted on the drive shaft. The result is that the drive sleeve 40 disengages from the driven shaft 50, as shown in Fig. 6.

When the drive shaft 30 continues to rotate and its speed is increased to a predetermined rate of rotation, the centrifugal swinging means 81 will actuate the centrifugal controlled switch 82 to de-energize the electromagnet members 71, causing said temporary magnetizable members 72 to lose their magnetism. Thus, the drive sleeve 40, which the temporary magnetizable members 72 are fixed to, is moved toward and engages the driven shaft 50 under impetus of the biasing force of the coil spring 73, so that the driven shaft 50 is rotated. When the the drive shaft 30 is slowed down to a rate slower than the predetermined rate of rotation, as a result of a load exerted on the driven shaft 50, the centrifugal controlled switch 82 energizes the electromagnet members (71) and causes the drive sleeve 40 to disengage the driven shaft 50.

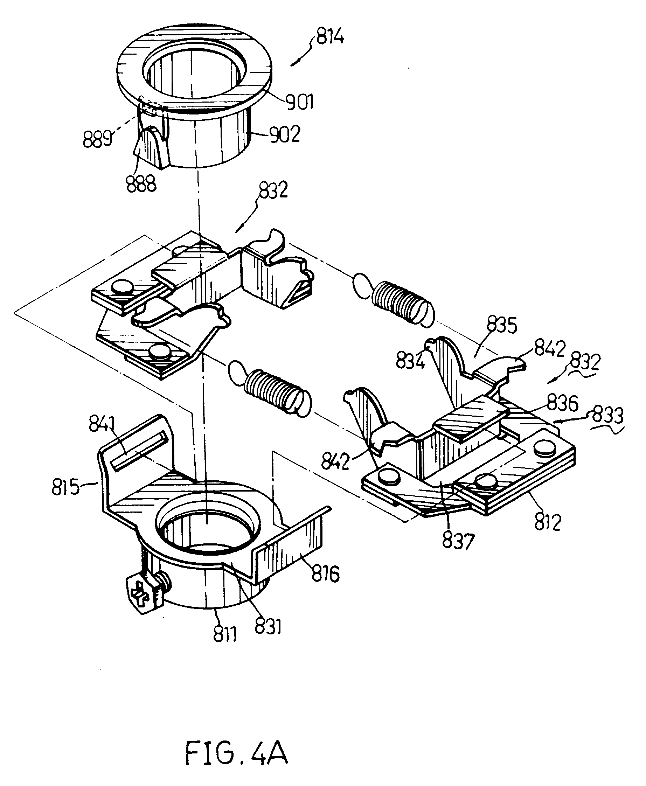

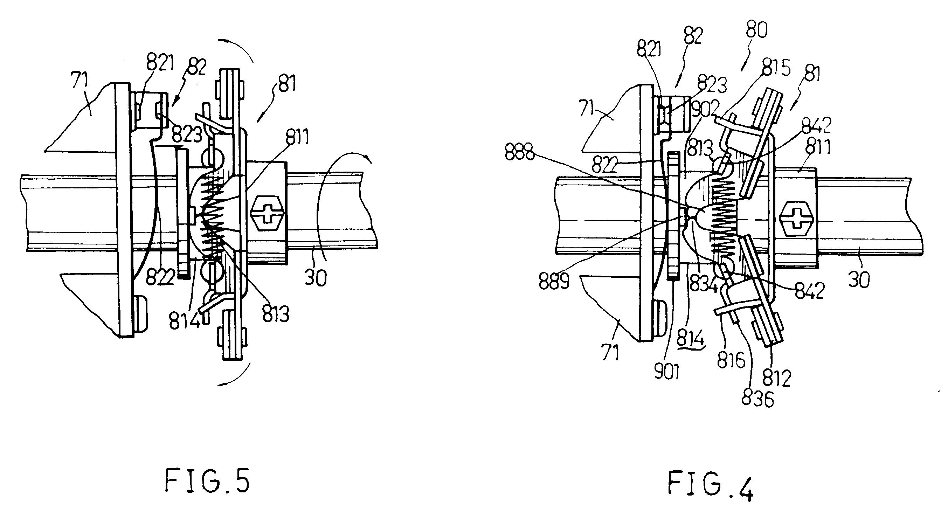

The centrifugally controlled switch 82 for controlling the electromagnet members 71 includes a fixed contact member 821 provided adjacent to the electromagnet members 71, a movable contact member 823, and a resilient member 822 on which the movable contact 823 is mounted, and a press member 814 movably mounted on the drive shaft 30 to press against the resilient member 822 so as to cause the movable member 823 to contact the fixed contact member 821, as shown in Figs. 4 and 5. The press member (814) is an annular flange 901 with a tubular member 902, and two pair of projections, one pair 889 diametrically extending on both sides of the flange 901 and the other pair 888 diametrically extending from the both sides of the tubular member 902.

Referring to Figs. 4 and 4(A), the centrifugal swinging means 81, which includes an annular support 811, spaced apart from the press member 814, is sleeved and fixed on the drive shaft 30 to movably hold two swing members 832. The swing members 832 are of equal weight and are diametrically opposed one on each side of the drive shaft 30. The annular support 811 has two arms (815, 816) extending from the flange 831 of the annular support 811 in two diametrically opposite positions. Each of the swing members 832 is a substantially V-shaped plate 833 to which is attached a counter weight 812. Tabs 834 are formed on the two arms 835 of each of the plate 833, and each plate 833 has a tongue 836 disposed between and planarly perpendicular to the tabs 834. Each of the arms (815, 816) of the annular support 811 extends through the opening 837 of the V-shaped plate 833 and each of the tongue 836 extends through a slot 841 in the arms (815, 816). The tabs 834 of each swing member 832 extend towards the projection 889 and respectively contact the projection 888 of the press member (814). Each tab of one of the swing members 832 coincides each tabs of the other swing member at each prjection (889, 888). The swing members so arranged are movable in radial and axial directions.

A torsion spring 813 is connected to between the flanges 842 of the adjacent tabs of the two swing members 832 to pull the adjacent tabs towards each other so that the tabs 834 are in tight contact with the projections (888, 889). The swing members can swing outward by the centrifugal force caused by the rotation of the drive shaft 30. The tension force of each spring 813 is so arranged that it allows each of the adjacent pairs of tabs to turn outward about the point of contact with the projection 888 when the speed of rotation reaches a predetermined high speed. When the tabs turn outward, they axially move away from the electromagnet members 71, against the force of the tension spring, thereby retracting the press member (814) from the resilient member 822, at the same time permitting the movable contact member 823 to move away from the fixed contact member 821. The resilient member 822 does not cause electrical connection between the contacts (821, 823) when the resilient member 822 is at rest, as shown in Fig. 6. At this time, the coil spring 73 urges the drive sleeve 40 to the driven shaft 50, so the driven shaft 50 rotates at a high speed.

The rate of rotation of the driven shaft 50 is lowered by resistance from a workpiece. That slows the driven shaft and the torsion spring 813 overcomes the centrifugal force on the counter weights 812, thus pulling the tabs 834 back together which in turn causes the press member 814 to push on the resilient member 822, re-establishing the electrical contact, re-energizing the magnets and retracting the drive sleeve 40 from the driven shaft 50, so that the drive shaft 30 can regain the predetermined rate of rotation. Thus this wrench can use a low power motor while still providing high torsional force at the beginning and the end of a given task.

## Claims

1. An electric wrench includes a housing enclosing a motor (10) with an axle (12), a transmission gear assembly (20) associated with said axle (12) of said motor, a rear end of a drive shaft (30) being fixedly attached to said gear assembly (20), a front end of a drive sleeve (40) having a pair of engaging members and said drive sleeve (40) being sleeved over said drive shaft (30), a front end of a driven shaft (50) having a clamping means to clamp a bit therein, and a pair of engaging members at its rear end of said driven shaft (50), said bit being extending out from said housing, a coil spring (73) disposed around said drive shaft (30) urging said drive sleeve (40) into a position nearer said driven shaft (50), in which position said two sets of engaging member of said driven shaft (50) and said drive sleeve (40) engage one another;
characterized in that the front end of said drive shaft (30) has a plurality of splined grooves (31) formed axially thereon;
said drive sleeve (40) having inner keys (41) axially extending through the central bore thereof, said inner keys (41) engaging said plurality of splined grooves (31) of said drive shaft (30);
an electromagnetically controlled clutch (70) including a plurality of electromagnet members (71) provided around said rear end of said drive shaft (30) and a temporary magnetizable member (72) provided around said rear end of said drive sleeve (40) adjacent to said electromagnet members (71), said temporary magnetizable member (72) being not rotatable with said drive sleeve (40) but axially movable with said drive sleeve (40), said temporary magnetizable member (72) being attractable by said electromagnet members (71) and moving against the biasing force of said coil spring (73) towards said electromagnet members (71) when said electromagnet members (71) are energized, thereby causing the engaging members of said drive sleeve (40) to disengage from the engaging members of said driven shaft (50);
a centrifugally controlled switch (82) to de-energize said electromagnet members (71) when said drive shaft (30) reaches a predetermined rate of rotation, and to re-energize said electromagnet members (71) when said drive shaft (30) slows to a rate less than said predetermined rate of rotation; and
a centrifugal swinging means (81) for actuating said centrifugally controlled switch (82).

2. An electric wrench as claimed in Claim 1, wherein said centrifugally controlled switch (82) includes a fixed contact member (821) provided adjacent to said electromagnet members (71), a movable contact member (823), a resilient member (822) mounted on said drive shaft (30) to hold and urge said movable contact member (823) away from said fixed contact member (821), and a press member (814) movably mounted on said drive shaft (30) to depress said resilient member (822) so as to make said movable contact member (823) touch said fixed contact member (821), and wherein said centrifugal swinging means (81) includes an annular support (811) fixed to said drive shaft (30), spaced from said press member (814), said annular support (811) having two arms (815,816) extending in two diametrically opposite positions, two swing members (832) each being mounted pivotally on one of said arms and extending between said press member (814) and said annular support (811), each of said swing members (832) having an inner end and an outer end, said inner ends converging towards said press member (814), said outer ends diverging towards said arms (815,816), and a means for urging said inner end inwards so as to depress said press member (814) when the system is at rest, said means interconnecting said inner ends, said inner ends moving away from said press member (814) and said resilient member (822) when said outer ends of said swing members (832) swing away from one another as a result of said drive shaft (30) reaching said predetermined rate of rotation, and urging said inner ends of said swing members (832) to push said press member (814) against said resilient member (822) when said drive shaft (30) rotates slower than said predetermined rate of rotation.

3. An electric wrench as claimed in Claim 1 wherein a bearing is disposed around said drive shaft (30) between said temporary magnetizable members (72) and said drive sleeve (40) so that said temporary magnetizable members (72) is not rotatable with said drive sleeve (40) but axially movable along said drive sleeve (40), a non-magnet member being disposed between said bearing and said temporary magnetizable members (72) so that said drive sleeve (40) is not magnetized by said electromagnet members (71) when said electromagnet members (71) is energized.

## Patentansprüche

1. Elektrischer Schraubenschlüssel, enthaltend ein Gehäuse, das einen Motor (10) mit einer Achse (12) umgibt, eine Übertragungsgetriebeanordnung (20), die mit der Achse (12) des Motors verbunden ist, wobei ein hinteres Ende einer Antriebswelle (30) fest an der Getriebeanordnung (20) befestigt ist, ein vorderes Ende einer Antriebshülse (40) ein Paar von Eingriffselementen aufweist und die Antriebshülse (40) über die Antriebswelle (30) geschoben ist, ein vorderes Ende einer Abtriebswelle (50) Klemmelemente zum Festklemmen eines Einsatzes aufweist sowie ein Paar von Eingriffselementen am hinteren Ende der Abtriebswelle (50), welcher Einsatz aus dem Gehäuse vorsteht, eine Schraubenfeder (73), die um die Antriebswelle (30) angeordnet ist und die Antriebshülse (40) in eine Position näher der Abtriebswelle (50) vorspannt, in welcher Position die beiden Sätze von Eingriffselementen der Abtriebswelle (50) und der Antriebshülse (40) miteinander in Eingriff stehen;
dadurch gekennzeichnet, dass das vordere Ende der Antriebswelle (30) eine Mehrzahl von Keilnuten (31) aufweist, die in Längsrichtung darin ausgebildet sind;
die Antriebshülse (40) Innenkeile (41) aufweist, die sich in Längsrichtung durch deren Mittelbohrung erstrecken, welche Innenkeile (41) mit der Mehrzahl von Keilnuten (31) der Antriebswelle (30) in Eingriff stehen;
eine elektromagnetisch gesteuerte Kupplung (70) mit einer Mehrzahl von Elektromagnetelementen (71), die um das hintere Ende der Antriebswelle (30) vorgesehen sind, und einem vorübergehend magnetisierbaren Element (72), das um das hintere Ende der Antriebshülse (40) angrenzend an die Elektromagnetelemente (71) angebracht ist, welches vorübergehend magnetisierbare Element (72) nicht mit der Antriebshülse (40) drehbar ist, sondern in Längsrichtung mit der Antriebshülse (40) bewegbar ist, wobei das vorübergehend magnetisierbare Element (72) von den Elektromagnetelementen (71) angezogen werden kann und sich gegen die Spannkraft der Schraubenfeder (73) zu den Elektromagnetelementen (71) bewegt, wenn die Elektromagnetelemente (71) erregt sind, wodurch die Eingriffselemente der Antriebshülse (40) von den Eingriffselementen der Abtriebswelle (50) gelöst werden;
sowie durch einen zentrifugal gesteuerten Schalter (82) zur Abschaltung der Elektromagnetelemente (71), wenn die Antriebswelle (30) eine vorgegebene Drehgeschwindigkeit erreicht, und zum Wiederanregen der Elektromagnetelemente (71), wenn die Antriebswelle (30) sich auf eine Geschwindigkeit unter der vorgegebenen Drehgeschwindigkeit verlangsamt; und
ein Zentrifugalschwingelement (81) zum Betätigen des zentrifugal gesteuerten Schalters (82).

2. Elektrischer Schraubenschlüssel nach Anspruch 1, wobei der zentrifugal gesteuerte Schalter (82) ein feststehendes Kontaktelement (821) enthält, das angrenzend an die Elektromagnetelemente (71) angebracht ist, sowie ein bewegliches Kontaktelement (823) und ein elastisches Element (822), das an der Antriebswelle (30) befestigt ist, um das bewegliche Kontaktelement (823) zu halten und von dem feststehenden Kontaktelement (821) wegzuspannen, sowie ein Presselement (814), das beweglich an der Antriebswelle (30) befestigt ist, um das elastische Element (822) niederzudrücken, so dass das bewegliche Kontaktelement (823) mit dem feststehenden Kontaktelement (821) in Berührung kommt, und wobei das Zentrifugalschwingelement (81) einen ringförmigen Träger (811) enthält, der an der Antriebswelle (30) befestigt ist und von dem Presselement (814) beabstandet ist, welcher ringförmige Träger (811) zwei Arme (815, 816) besitzt, die sich in zwei diametral gegenüberliegenden Richtungen erstrecken, wobei zwei Schwingelemente (832) jeweils schwenkbar an einem der Arme befestigt sind und sich zwischen dem Presselement (814) und dem ringförmigen Träger (811) erstrecken, wobei jedes der Schwingelemente (832) ein inneres Ende und ein äusseres Ende aufweist, welche inneren Enden zu dem Presselement (814) konvergieren und welche äusseren Enden zu den Armen (815, 816) divergieren, sowie ein Element zum Vorspannen des inneren Endes nach innen, so dass das Presselement (814) niedergedrückt wird, wenn sich das System in Ruhestellung befindet, welches Element die inneren Enden verbindet, welche inneren Enden sich von dem Presselement (814) und dem elastischen Element (822) wegbewegen, wenn die äusseren Enden der Schwingelemente (832) auseinander schwingen, da die Antriebswelle (30) die vorgegebene Drehgeschwindigkeit erreicht, und die inneren Enden der Schwingelemente (832) vorspannen, um das Presselement (814) gegen das elastische Element (822) zu pressen, wenn die Antriebswelle (30) langsamer als in der vorgegebenen Drehgeschwindigkeit dreht.

3. Elektrischer Schraubenschlüssel nach Anspruch 1, wobei ein Lager um die Antriebswelle (30) zwischen den vorübergehend magnetisierbaren Elementen (72) und der Antriebshülse (40) angeordnet ist, so dass die vorübergehend magnetisierbaren Elemente (72) nicht mit der Antriebshülse (40) drehbar aber entlang der Antriebshülse (40) in Längsrichtung bewegbar sind, wobei ein Nichtmagnetelement zwischen dem Lager und den vorübergehend magnetisierbaren Elementen (72) angeordnet ist, so dass die Antriebshülse (40) nicht durch die Elektromagnetelemente (71) magnetisiert wird, wenn die Elektromagnetelemente (71) angeregt sind.

## Revendications

1. Clef électrique comportant un boîtier renfermant un moteur (10) avec un arbre (12), un assemblage (20) d'engrenages de transmission associé audit arbre (12) dudit moteur, une extrémité arrière d'un arbre d'entraînement (30) étant fixée audit assemblage (20) d'engrenages de transmission, une extrémité avant d'un manchon d'entraînement (40) comportant une paire d'éléments d'accouplement et ledit manchon d'entraînement (40) étant glissé sur ledit arbre d'entraînement (30), une extrémité avant d'un arbre entraîné (50) ayant un moyen de serrage pour serrer un bout dans celle-ci, et une paire d'éléments d'accouplement à son extrémité arrière dudit arbre entraîné (50), ledit bout s'étendant hors dudit boîtier, un ressort hélicoïdal (73) disposé autour dudit arbre d'entraînement (30) poussant ledit manchon d'entraînement (40) dans une position plus proche dudit arbre entraîné (50), lesdites deux séries d'éléments d'accouplement dudit arbre entraîné (50) et ledit manchon d'entraînement (40) coopérant l'un avec l'autre dans cette position ;
caractérisé en ce que l'extrémité avant dudit arbre d'entraînement (30) comporte une pluralité de cannelures (31) formées axialement sur celui-ci ;
ledit manchon d'entraînement (40) comportant des clavettes internes (41) s'étendant axialement dans le trou central de celui-ci, lesdites clavettes internes (41) coopérant avec ladite pluralité de cannelures (31) dudit arbre d'entraînement (30) ;
un embrayage (70) à commande électromagnétique comportant une pluralité d'éléments d'électro-aimants (71) disposés autour de ladite extrémité arrière dudit arbre d'entraînement (30) et un élément (72) magnétisable temporairement disposé autour de ladite extrémité arrière dudit manchon d'entraînement (40) dans une position adjacente auxdits éléments d'électroaimants (71), ledit élément magnétisable temporairement (72) ne pouvant pas tourner avec ledit manchon d'entraînement (40) mais pouvant se déplacer axialement avec ledit manchon d'entraînement (40), ledit élément magnétisable temporairement (72) pouvant être attiré par lesdits éléments d'électro-aimants (71) et se déplaçant à l'encontre de la force de rappel dudit ressort hélicoïdal (73) vers lesdits éléments d'électro-aimants (71) lorsque lesdits éléments d'électro-aimants (71) sont excités, afin de conduire les éléments d'accouplement dudit manchon d'entraînement (40) à libérer les éléments d'accouplement dudit arbre entraîné (50) ;
un commutateur (82) à commande centrifuge pour supprimer l'excitation desdits éléments d'électro-aimants (71) lorsque ledit arbre d'entraînement (30) atteint une vitesse de rotation prédéterminée, et pour exciter à nouveau lesdits éléments d'électro-aimants (71) lorsque ledit arbre d'entraînement (30) ralentit à une vitesse inférieure à ladite vitesse de rotation prédéterminée ; et
un moyen à basculement centrifuge (81) pour actionner ledit commutateur (82) à commande centrifuge.

2. Clef électrique selon la revendication 1, dans laquelle ledit commutateur (82) à commande centrifuge comporte un élément de contact fixe (821) disposé dans une position adjacente auxdits éléments d'électroaimants (71), un élément de contact mobile (823), un élément élastique (822) monté sur ledit arbre d'entraînement (30) pour maintenir et pousser ledit élément de contact mobile (823) dans une position éloignée dudit élément de contact fixe (821), et un élément de pression (814) monté de façon mobile sur ledit arbre d'entraînement (30) pour appuyer sur ledit élément élastique (822) de manière que ledit élément de contact mobile (823) vienne en contact avec ledit élément de contact fixe (821), et dans lequel ledit moyen à basculement centrifuge (81) comporte un support annulaire (811) fixé audit arbre d'entraînement (30), espacé dudit élément de pression (814), ledit support annulaire (811) ayant deux bras (815, 816) s'étendant dans deux positions diamétralement opposées, deux éléments basculants (832) montés chacun de manière à pivoter sur l'un desdits bras et s'étendant entre ledit élément de pression (814) et ledit support annulaire (811), chacun desdits éléments basculants (832) ayant une extrémité interne et une extrémité externe, lesdites extrémités internes convergeant vers ledit élément de pression (814), lesdites extrémités externes divergeant vers lesdits bras (815, 816), et un moyen pour pousser lesdites extrémités internes vers l'intérieur de manière à enfoncer ledit élément de pression (814) lorsque le système est au repos, ledit moyen interconnectant lesdites extrémités internes, lesdites extrémités internes s'éloignant dudit élément de pression (814) et dudit élément élastique (822) lorsque lesdites extrémités externes desdits éléments basculants (832) basculent en s'éloignant l'un de l'autre lorsque ledit arbre d'entraînement (30) atteint ladite vitesse de rotation prédéterminée, et poussant lesdites extrémités internes desdits éléments basculants (832) pour pousser ledit élément de pression (814) contre ledit élément élastique (822) lorsque ledit arbre d'entraînement (30) tourne plus lentement que ladite vitesse de rotation prédéterminée.

3. Clef électrique selon la revendication 1 dans laquelle un palier est disposé autour dudit arbre d'entraînement (30) entre lesdits éléments magnétisables temporairement (72) et ledit manchon d'entraînement (40) de manière que lesdits éléments magnétisables temporairement (72) ne puissent pas tourner avec ledit manchon d'entraînement (40) mais puissent se déplacer axialement le long dudit manchon d'entraînement (40), un élément non magnétique étant disposé entre ledit palier et lesdits éléments magnétisables temporairement (72) de manière que ledit manchon d'entraînement (40) ne soit pas magnétisé par lesdits éléments d'électro-aimants (71) lorsque lesdits éléments d'électro-aimants (71) sont excités.
